# EUROPÄISCHE PATENTSCHRIFT

(11) **EP 1 034 389 B1**
(45) Veröffentlichungstag und Bekanntmachung des Hinweises auf die Patenterteilung: **31.10.2001**
(21) Anmeldenummer: 98964451.3
(22) Anmeldetag: 02.12.1998
(51) Int. Cl.: F16H 61/46, F16H 47/02

(54) **HYDROMECHANISCHER FAHRANTRIEB**
HYDROMECHANICAL TRAVELLING MECHANISM
SYSTEME DE TRANSMISSION HYDROMECANIQUE

(30) Priorität: 04.12.1997 DE 19753729
(43) Veröffentlichungstag der Anmeldung: 13.09.2000
(73) Patentinhaber: ZF FRIEDRICHSHAFEN Aktiengesellschaft, 88038 Friedrichshafen (DE)
(72) Erfinder: LEGNER, Jürgen, D-88048 Friedrichshafen (DE); MANN, Egon, D-88045 Friedrichshafen (DE); STÜTZLE, Siegfried, D-88045 Friedrichshafen (DE)
(86) Internationale Anmeldenummer: EP9807653
(87) Internationale Veröffentlichungsnummer: WO9930061

(56) Entgegenhaltungen:
- WO-A-89/03320
- DE-A- 2 652 976
- DE-A- 4 223 846
- DE-A- 4 431 864

## Beschreibung

Die Erfindung betrifft einen Fahrantrieb nach der im Oberbegriff von Anspruch 1 näher definierten Art.

Fahrantriebe mit einem hydrostatischen Getriebe und einem mehrgängigen Zahnräderwechselgetriebe werden für mobile Bau- und Arbeitsmaschinen, z. B. Radlader, Bagger oder Raupen verwendet. Dabei treibt ein Antriebsmotor, insbesondere ein Dieselmotor, eine hydrostatische Verstellpumpe an, die zusammen mit dem Verstellmotor ein hydrostatisches Getriebe bildet, dessen Übersetzungsverhältnis durch einen drehzahlabhängigen Steuerdruck verstellt wird. Man spricht hier von einer drehzahlabhängigen, automotiven Verstellung des hydrostatischen Antriebs, d. h. Pumpe und Motor regeln selbsttätig das Übersetzungsverhältnis in Abhängigkeit von der Drehzahl und der Last des Primärantriebs und zwar so, daß das Übersetzungsverhältnis mit steigender Last zu- und mit steigender Drehzahl abnimmt. Neben dem hydrostatischen Getriebe gehört zu dieser Antriebseinrichtung ein lastschaltbares Getriebe, häufig in Form eines Zwei-Gang-Planetengetriebes. Zwei vom Primärantrieb angetriebene Hilfspumpen, eine Speise- und eine Steuerpumpe, erzeugen den System- und den Steuerdruck. Anstelle dieser zwei Hilfspumpen kann auch eine Hilfspumpe mit einem Verteilersystem verwendet werden.
Elektromagnetische Ventile steuern die Druckmittelzufuhr zu den Lastschaltelementen, die pneumatisch, hydraulisch, elektromagnetisch oder durch Federn betätigt werden können.

Bei Fahrantriebssystemen für schnellfahrende Arbeitsmaschinen unterscheidet man mehrere Konzeptvarianten.
Die verschiedenen Antriebskonzepte sind auf die jeweiligen Hauptanforderungen zugeschnitten. So sind die im Stillstand schaltbaren Klauen- oder Schieberadgetriebe zwar kostengünstig herstellbar, ermöglichen jedoch nur Schaltungsvorgänge im Stillstand bei gleichzeitig ungünstigem Bedienungskomfort.
Demgegenüber kann durch die Verwendung von hydrostatischen Summierungsgetrieben mit zwei oder mehr Hydromotoren ein relativ guter Fahrkomfort erreicht werden. Diese Variante ist jedoch relativ teuer und weist nur einen kleinen Wandlungsbereich sowie einen ungünstigen Wirkungsgrad bei höheren Fahrgeschwindigkeiten auf. Eine weitere, ebenfalls teure und einen hohen Aufwand erfordernde Lösung ist ein Kombinationsgetriebe mit hydrostatischer Summierung und nachgeschalteten Lastschaltkupplungen. Hierbei werden die Schaltvorgänge immer in dem Zweig des Getriebes durchgeführt, der keine Leistung überträgt.
Lastschaltgetriebe mit stufenlos verstellbarer Hydrostatik in Verbindung mit synchronisierten Schaltabläufen bieten einen hohen Fahrkomfort, sind jedoch von den Kosten und vom Wirkungsgrad bei höherer Fahrgeschwindigkeit eine unwirtschaftliche Lösung.

Ein Fahrantrieb mit einem hydrostatischen Getriebe und einem mehrgängigen Zahnräderwechselgetriebe für mobile Bauund Arbeitsmaschinen ist bekannt aus der gattungsgemäßen DE 44 31 864 A1. Dieser Fahrantrieb ist jedoch durch die Verwendung eines Lastschaltgetriebes aufwendig und teuer.

Der vorliegenden Erfindung liegt die Aufgabe zugrunde eine kostengünstige, einfache Antriebslösung darzustellen, welche sich durch günstige Wirkungsgradverhältnisse, relativ komfortable Schaltabläufe auch während der Fahrt und die Möglichkeit von automatischen Schaltvorgängen auszeichnet. Darüber hinaus soll sie für offene und geschlossene hydrostatische Hydraulikkreisläufe sowie für langsam- und schnellfahrende Arbeitsmaschinen geeignet sein.

Die der Erfindung zugrundeliegende Aufgabe wird durch einen auch die kennzeichnenden Merkmale des Hauptanspruchs aufweisenden, gattungsgemäßen Fahrantrieb gelöst.

Die Verwendung eines hydrostatisch angetriebenen 2-Gang-Getriebes mit Synchronisierung an Stelle eines Lastschaltgetriebes ermöglicht die Gestaltung einer kleinen, kompakten und preisgünstigen Baugruppe, die gleichzeitig eine hohe Leistung übertragen kann. Desweiteren kann die Synchronisierung, durch das geringe zu übertragende Moment beim Schaltvorgang, klein dimensioniert werden. Zudem kann diese Baugruppe sowohl für geschlossene wie auch für offene Hydraulikkreisläufe verwendet werden.

Vorteilhafte und zweckmäßige Ausgestaltungen der Erfindung sind in den Unteransprüchen angegeben. Die Erfindung ist aber nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Nachfolgend sind anhand der Hydraulikschemata zwei Ausführungsbeispiele der vorliegenden Erfindung prinzipgemäß beschrieben.
Es zeigen:
- Fig. 1: eine schematische Darstellung eines erfindungsgemäßen Fahrantriebs für einen geschlossenen, hydrostatischen Kreislauf, beispielsweise eines Radladers, und
- Fig. 2: eine schematisch dargestellte Anordnung eines erfindungsgemäßen Fahrantriebs für einen offenen, hydrostatischen Kreislauf, beispielsweise eines Mobilbaggers;

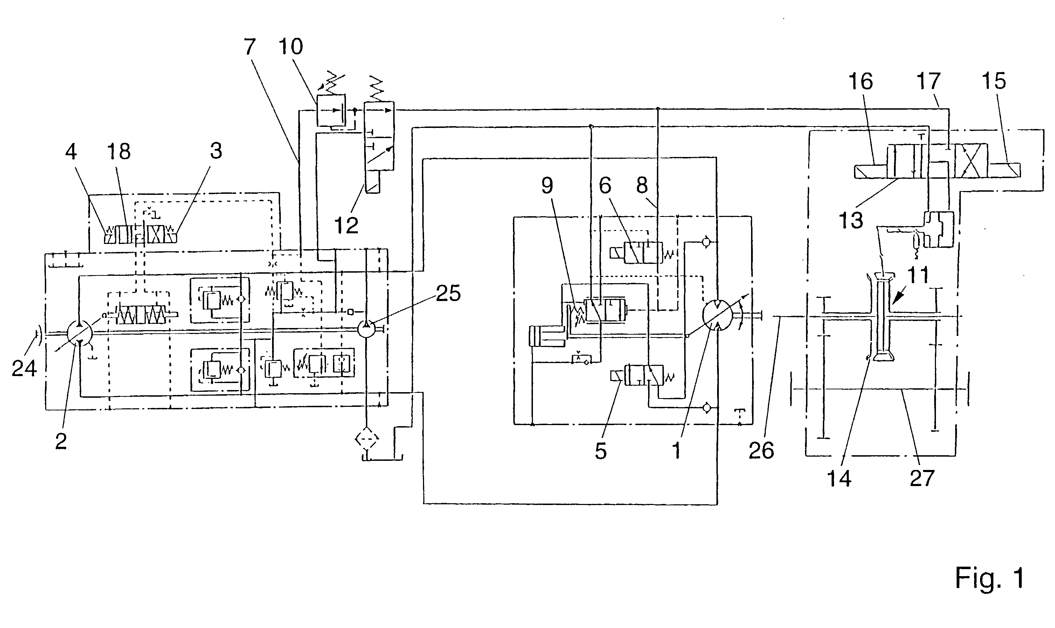

Anhand der Fig. 1 wird der Schaltablauf bei einem geschlossenen hydrostatischen Kreislauf, z. B. eines Radladers beschrieben, bei dem entweder volle Geschwindigkeit oder volle Schaufelkraft benötigt wird. Die Fahrtrichtung wird mit Hilfe der Magnetventile 3 oder 4 an der hydrostatischen Verstellpumpe 2 geschaltet. Am hydrostatischen Verstellmotor 1 wird die Fahrtrichtung durch das Magnetventil 5 zugeordnet, um eine Verstellung während des Schubbetriebs in Richtung des maximalen Schluckvolumens zu verhindern. Am hydrostatischen Verstellmotor 1 ist ein Ventil 6 zum Einstellen des maximalen Schluckvolumens vorgesehen, welches für einen Kriechgang benutzt werden kann.

Der hydrostatische Verstellmotor 1 ist vorteilhafterweise ein Nullhubmotor, dessen Schluckvolumen, und daraus resulterend auch das zu übertragende Drehmoment, von einem Maximalwert bis auf Null reduziert werden kann.

Nachfolgend werden die Verstellvorgänge von hydrostatischer Verstellpumpe 2 und hydrostatischem Verstellmotor 1 im Fahrbetrieb beschrieben. Die hydrostatische Verstellpumpe 2 schwenkt entsprechend der Antriebsdrehzahl des Antriebsmotors 24 aus. Durch die entstehenden Rückstellkräfte der hydrostatischen Verstellpumpe 2 wirkt der lastabhängige Hochdruck rückschwenkend, d. h. die Drehzahl des hydrostatischen Verstellmotors 1 nimmt ab. Der drehzahlproportionale Steuerdruck steht am Steuerdruckanschluß 7 der hydrostatischen Verstellpumpe 2 sowie am Steuerdruckanschluß 8 des hydrostatischen Verstellmotors 1 an. Der hydrostatische Verstellmotor 1 schwenkt steuerdruckabhängig vom maximalen zu einem kleineren Schluckvolumen. Im normalen Fahrbetrieb, d. h. im ersten oder zweiten Gang, muß die maximale Drehzahl des hydrostatischen Verstellmotors 1 begrenzt werden. Da dies nicht durch das Einstellen eines mechanischen Anschlags zur Festlegung des minimalen Schluckvolumens möglich ist, muß das minimale Schluckvolumen durch Erzeugen eines Gleichgewichts zwischen Steuerdruck und der durch die Rückmeldefeder 9 erzeugten Kraft hydraulisch - mechanisch eingestellt werden. Der maximale Steuerdruck und das damit verbundene minimale Schluckvolumen wird durch ein Druckminderventil 10 begrenzt. Der steuerdruckabhängigen Verstellung des Schluckvolumens des hydrostatischen Verstellmotors 1 vom Maximum zum Minimum steht eine hochdruckabhängige Verstellung des Schluckvolumens des hydrostatischen Verstellmotors 1 vom Minimum zum Maximum entgegen.

Die während der Fahrt möglichen Gangwechsel vom 1. in den 2. Gang und umgekehrt finden nur im Automatikbetrieb statt und werden abhängig von der Abtriebsdrehzahl des Getriebes 11 ausgeführt. Beim Gangwechsel wird zunächst das Magnetventil 12 geschaltet, was bewirkt, daß am Steuerdruckanschluß 8 des hydrostatischen Verstellmotors 1 ein Speisedruck ansteht, der höher als der maximale Druck des Druckminderventils 10 ist. Dieser Speisedruck reduziert das Schluckvolumen des hydrostatischen Verstellmotors 1 auf Null und führt gleichzeitig zu einem Ansteigen des Hochdrucks und damit auch zu einer Reduzierung des Drehmoments auf Null. Während dieses Vorganges wird die Festlegung der Fahrtrichtung an der hydrostatischen Verstellpumpe 2 durch das Magnetventil 3 oder 4 abgeschaltet, was bewirkt, daß der Hochdruck im Antriebssystem während des Schaltvorganges sehr gering ist.
Sobald das Schluckvolumen des hydrostatischen Verstellmotors 1 auf Null steht, wird der neue Gang im Getriebe geschaltet. Die Synchronisierphase wird beendet, sobald der Abgleich von An- und Abtriebsdrehzahl abgeschlossen ist. Die dafür benötigte Schaltzeit ist abhängig vom Drehzahlsprung zwischen An- und Abtriebsdrehzahl. Am Anschluß 17 des 4/3-Wegeventils 13 des Getriebes 11 steht während der Schaltphase immer der Speisedruck an. Die Synchronisierung 14 des Getriebes 11 paßt die Drehzahl des hydrostatischen Verstellmotors 1 entsprechend der Schaltungsart (vom 1. in den 2. Gang oder umgekehrt) und dem Stufensprung der Abtriebsdrehzahl automatisch an. Die Synchronisierung muß lediglich die trägen Massen des Getriebes 11 und des hydrostatischen Verstellmotors 1 sowie das Schleppmoment des auf Schluckvolumen Null stehenden hydrostatischen Verstellmotors 1 schalten.

Ist der hydrostatische Verstellmotor 1 auf die neue Übersetzung synchronisiert, werden die Magnetventile 12 und 15 bzw. 12 und 16 ab- und die Fahrtrichtung an der hydrostatischen Verstellpumpe 2 durch das Magnetventil 3 bzw. 4 zugeschaltet.

Das Fördervolumen der hydrostatischen Verstellpumpe 2 sowie das Schluckvolumen des hydrostatischen Verstellmotors 1 stellen sich entsprechend dem drehzahlabhängigen Steuerdruck und dem lastabhängigen Hochdruck ein. Das Drehmoment des hydrostatischen Verstellmotors 1 steigt von Null aus wieder an, der Schaltvorgang ist abgeschlossen.

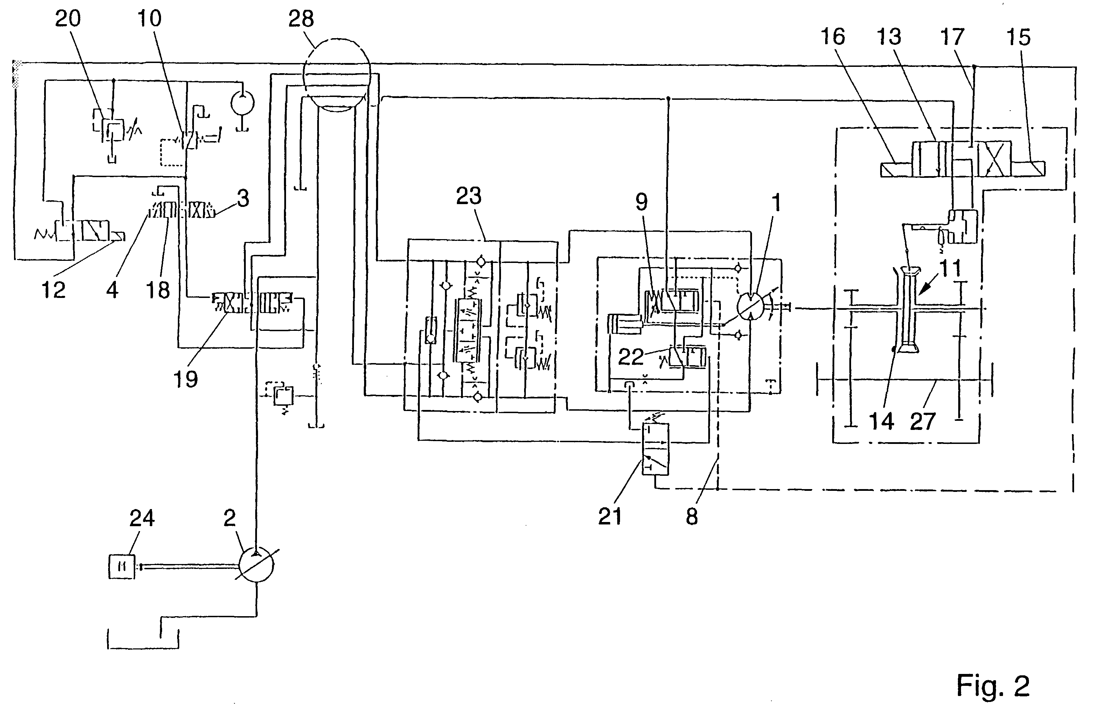

Mit Hilfe von Fig. 2 soll der Schaltablauf bei einem offenen hydrostatischen Kreislauf, z. B. eines Mobilbaggers beschrieben werden, bei dem entweder volle Geschwindigkeit oder volle Schaufelkraft benötigt wird.

Die Fahrtrichtung wird auch in diesem Fall durch Betätigung des Magnetventils 3 oder 4 am Fahrtrichtungsventil 18 vorgewählt.
Zunächst soll die Fördermengeneinstellung und der Verstellvorgang des hydrostatischen Verstellmotors 1 im Fahrbetrieb beschrieben werden.
Die Fördermenge der hydrostatischen Verstellpumpe 2 zum hydrostatischen Verstellmotor 1 ist abhängig von zwei Parametern, nämlich der Motorantriebsdrehzahl und dem Vorsteuerdruck des einstellbaren Druckminderventils 10 , das mit dem Fußpedal des Gerätebedieners verknüpft ist. Proportional zu dem vom Druckminderventil 10 über das als 4/3-Wegeventil abgebildete Fahrtrichtungsventil 18 geführten Steuerdruck wird das 6/3-Wegeventil 19 angesteuert, d. h. entsprechend der Öffnung im 6/3-Wegeventil 19 wird der Ölstrom zum hydrostatischen Verstellmotor 1 freigegeben.

Der hydrostatische Verstellmotor 1 schwenkt steuerdruckabhängig vom maximalen zu kleinerem Schluckvolumen. Der Steuerdruck kommt vom Druckminderventil 10 über das Magnetventil 12 und durch die Drehdurchführung am Steuerdruckanschluß 8 des hydrostatischen Verstellmotors 1 an. Im normalen Fahrbetrieb, d. h. im ersten oder zweiten Gang, muß auch hier die maximale Hydromotordrehzahl durch das Einstellen eines Gleichgewichtes zwischen dem Steuerdruck und der Kraft der Rückmeldefeder 9 hydraulisch/mechanisch begrenzt werden. Der maximale Steuerdruck und in der Folge das minimale Schluckvolumen wird durch ein Druckminderventil 10 begrenzt.

Die während der Fahrt möglichen Gangwechsel vom 1. in den 2. Gang und umgekehrt finden nur im Automatikbetrieb statt und werden abhängig von der Abtriebsdrehzahl des Getriebes 11 ausgeführt. Beim Gangwechsel wird zunächst das Magnetventil 12 geschaltet, was bewirkt, daß am Anschluß 8 des hydrostatischen Verstellmotors 1 der durch das Druckbegrenzungsventil 20 eingestellte Vorsteuerdruck ansteht, der höher als der maximale Druck des Druckminderventils 10 ist. Am hydrostatischen Verstellmotor 1 ist ein hydraulisch betätigbares 3/2-Wegeventil 21 angebaut, welches den Zulaufdruck zum Konstantdruckregler 22 des hydrostatischen Verstellmotors 1 während des Fahrbetriebs frei gibt.

Beim Aufschalten des Vorsteuerdrucks schaltet das 3/2-Wegeventil 21 um und setzt somit die hochdruckabhängige Verstellung des hydrostatischen Verstellmotors 1 in Richtung des maximalen Schluckvolumens außer Kraft. Der hydrostatische Verstellmotor 1 verstellt als Folge davon das Schluckvolumen auf Null, was gleichzeitig zu einem Abfallen des Drehmomentes des hydrostatischen Verstellmotors 1 ebenfalls bis auf Null und zu einem Ansteigen des Hochdrucks führt. Während diesem Vorgang wird die Fahrtrichtung am Magnetventil 3 oder 4 abgeschaltet, wodurch der Hochdruck im Antriebssystem zwischen hydrostatischer Verstellpumpe 2 und Bremsventil 23 sehr gering ist. Sobald der hydrostatische Verstellmotor 1 auf Schluckvolumen Null steht, wird der neue Gang im Getriebe 11 geschaltet, welches das Ende der Synchronisierungsphase durch den Vergleich von Antriebs- und Abtriebsdrehzahl erkennt. Die für diesen Vorgang benötigte Schaltzeit ist hauptsächlich von der Größe des Getriebesprungs abhängig.
Am Anschluß 17 des 4/3-Wegeventiles 13 des Getriebes 11 steht während der Schaltphase der Vorsteuerdruck an. Die Synchronisierung 14 paßt die Drehzahl des hydrostatischen Verstellmotors 1 entsprechend der Schaltungsart und dem Stufensprung der Abtriebsdrehzahl an.
Die Synchronisierung 14 muß auch in diesem Fall lediglich die trägen Massen von Getriebe 11 und hydrostatischem Verstellmotor 1 sowie das geringe Schleppmoment des auf Schluckvolumen Null stehenden hydrostatischen Verstellmotors 1 schalten. Dadurch kann die Synchronisierung 14 klein dimensioniert werden.

Ist der hydrostatische Verstellmotor 1 auf die neue Drehzahl synchronisiert, werden die Magnetventile 12 und 15 bzw. 12 und 16 ab- und die Fahrtrichtung am Fahrtrichtungsventil 18 durch das Magnetventil 3 oder 4 zugeschaltet. Das Fördervolumen der hydrostatischen Verstellpumpe 2 zum hydrostatischen Verstellmotor 1 stellt sich dann entsprechend dem Steuerdruck des Druckminderventils 10 und dem lastabhängigen Hochdruck ein. Das Drehmoment des hydrostatischen Verstellmotors 1 steigt nun wieder von Null aus an und der Schaltvorgang ist beendet.

### Bezugszeichen

- 1: hydrostatischer Verstellmotor
- 2: hydrostatische Verstellpumpe
- 3: Magnetventil
- 4: Magnetventil
- 5: Magnetventil
- 6: Ventil zur Einstellung des maximalen Schluckvolumens
- 7: Steuerdruckanschluß
- 8: Steuerdruckanschluß
- 9: Rückmeldefeder
- 10: Druckminderventil
- 11: Getriebe
- 12: Magnetventil
- 13: 4/3-Wegeventil
- 14: Synchronisierung
- 15: Magnetventil
- 16: Magnetventil
- 17: Druckanschluß des 4/3-Wegeventils
- 18: Fahrtrichtungsventil
- 19: 6/3-Wegeventil
- 20: Druckbegrenzungsventil
- 21: 3/2-Wegeventil
- 22: Konstantdruckregler
- 23: Bremsventil
- 24: Antriebsmotor
- 25: Speisepumpe
- 26: Antriebswelle
- 27: Abtriebswelle
- 28: Drehdurchführung

## Patentansprüche

1. Fahrantrieb mit einem Antriebsmotor (24), der eine Speisepumpe (25) und eine hydrostatische Verstellpumpe (2) antreibt, mit einem hydrostatischen Verstellmotor (1), der mit der hydrostatischen Verstellpumpe (2) einen hydrostatischen Kreislauf bildet und ein 2-Gang-Getriebe (11) antreibt, mit einem Fahrtrichtungsventil (18) und einem Druckminderventil (10) zur Regelung des Steuerdrucks, **dadurch gekennzeichnet, daß** der hydrostatische Verstellmotor (1) ein Nullhubmotor ist, dessen Schluckvolumen durch die Veränderung von Steuer- und Hochdruck so geregelt wird, daß das zu übertragende Drehmoment während des Schaltvorgangs minimal ist und die Verstellposition des hydrostatischen Nullhubmotors (1) über eine Rückmeldefeder (9) im Gleichgewicht mit dem anliegenden Steuer- und Hochdruck steht und daß das 2-Gang-Getriebe mit einer Synchronisierung (14) versehen ist.

2. Fahrantrieb nach Anspruch 1, **dadurch gekennzeichnet, daß** der Ölfluß zwischen der hydrostatischen Verstellpumpe (2) und dem hydrostatischen Verstellmotor (1) bei dessen Nullstellung unterbrochen ist und damit der anstehende Hochdruck ebenfalls Null ist.

3. Fahrantrieb nach Anspruch 1 und 2, **dadurch gekennzeichnet, daß** der Fahrantrieb für offene und geschlossene Hydraulikkreisläufe verwendet werden kann.

4. Fahrantrieb nach Anspruch 1 und 2, **dadurch gekennzeichnet, daß** bei einem offenen Hydraulikkreislauf ein 3/2-Wegeventil (21) zur Zu- bzw. Abschaltung des anstehenden Hochdrucks verwendet wird.

5. Fahrantrieb nach Anspruch 1, **dadurch gekennzeichnet, daß** die Synchronisierung (14) des Getriebes (11) auf der Antriebs- (26) oder der Abtriebswelle (27) sitzen kann.

## Claims

1. Travelling drive with a drive motor (24), which drives a feed pump (25) and a hydrostatic variable-displacement pump (2), with a hydrostatic variable-displacement motor (1), which forms a hydrostatic circuit with the hydrostatic variable-displacement pump (2) and drives a two-speed transmission (11), with a direction-of-travel valve (18) and a pressure reducing valve (10) for regulating the control pressure, **characterised in that** the hydrostatic variable-displacement motor (1) is a zero-delivery motor, the absorption volume of which is regulated by varying control and high pressure such that the torque which is to be transmitted during the switching operation is minimal and the displacement position of the hydrostatic zero-delivery motor (1) is balanced with the applied control and high pressure via a return spring (9), and that the two-speed transmission is provided with a synchronising unit (14).

2. Travelling drive according to Claim 1, **characterised in that** the oil flow between the hydrostatic variable-displacement pump (2) and the hydrostatic variable-displacement motor (1) is interrupted when the latter is at zero position and the available high pressure is therefore also zero.

3. Travelling drive according to Claims 1 and 2, **characterised in that** the travelling drive can be used for open and closed hydraulic circuits.

4. Travelling drive according to Claims 1 and 2, **characterised in that** a 3/2-way valve (21) is used to connect and disconnect the available high pressure in an open hydraulic circuit.

5. Travelling drive according to Claim 1, **characterised in that** the synchronising unit (14) of the transmission (11) can be seated on the output shaft (26) or the input shaft (27).

## Revendications

1. Entraînement de propulsion comprenant un moteur de commande (24), qui entraîne une pompe d'alimentation (25) et une pompe réglable hydrostatique (2), un moteur réglable hydrostatique (1), qui forme un circuit hydrostatique avec la pompe réglable hydrostatique (2), et qui entraîne une transmission à deux rapports (11), une soupape de sens de marche (18) et une soupape de réduction de pression (10) destinée au réglage de la pression de commande, **caractérisé en ce que** le moteur réglable hydrostatique (1) est un moteur à course annulable dont le volume d'aspiration est réglé par la modification de la pression de commande et de la haute pression, **en ce que** le couple à transmettre pendant le processus de changement de rapport est minime et que la position de réglage du moteur hydrostatique à course annulable (1) est mise en équilibre avec la pression de commande et la haute pression appliquée au moyen d'un ressort de rappel (9) et **en ce que** la transmission à deux rapports est pourvue d'un dispositif de synchronisation (14).

2. Entraînement de propulsion selon la revendication 1, **caractérisé en ce que** le flux d'huile entre la pompe réglable hydrostatique (2) et le moteur réglable hydrostatique (1) est interrompu dans la position zéro de ce moteur et que, de ce fait, la haute pression présente est également nulle.

3. Entraînement de propulsion selon la revendication 1 ou 2, **caractérisé en ce que** l'entraînement de propulsion peut être utilisé pour des circuits hydrauliques ouverts et fermés.

4. Entraînement de propulsion selon la revendication 1 ou 2, **caractérisé en ce que**, dans un circuit hydrostatique ouvert, on utilise un distributeur 3/2 (21) pour l'activation et la désactivation de la haute pression présente.

5. Entraînement de propulsion selon la revendication 1, **caractérisé en ce que** le dispositif de synchronisation (14) de la transmission (11) peut être monté sur l'arbre d'entrée (26) ou sur l'arbre de sortie (27).
